# EUROPEAN PATENT SPECIFICATION

(11) **EP 0 796 560 B1**
(45) Date of publication and mention of the grant of the patent: **16.08.2001**
(21) Application number: 97200381.8
(22) Date of filing: 13.02.1997
(51) Int. Cl.: A21D 13/08, A21D 13/00, A21D 6/00

(54) **Labelled dough products**
Markierte Teigprodukten
Produits marqués à base de pâte

(30) Priority: 21.02.1996 EP 96200447
(43) Date of publication of application: 24.09.1997
(73) Proprietor: UNILEVER N.V., 3000 DK Rotterdam (NL); UNILEVER PLC, London EC4P 4BQ (GB)
(72) Inventor: Karinthi, Agnes, 60740 Saint Maximin (FR)
(74) Representative: Joppe, Hermina L. P.

(56) References cited:
- WO-A-94/10853
- DE-A- 3 515 075
- DE-U- 9 114 114
- FR-A- 2 640 473
- FR-A- 2 645 408
- FR-A- 2 697 973
- US-A- 5 017 394

## Description

Baked dough products, such as bread, baguette, rolls, croissants, Danish pastry, galette des Rois etc. are well-known. Although it is known to provide some of these products with a label from time to time, it was also known, that labelling of the baked dough product so far led to products, which suffered from insufficient adherence between the baked dough product and the label, so that the label did not stick to the baked product in a sufficient way. Attempts to improve this adherence by labelling the dough prior to baking and baking of the dough, provided with the label led to products, that displayed an irregular colour pattern at the place of the label, so that the text or the image, present at the label prior to baking, was no longer legible or recognisable in the baked products. As one of functions of labelling of baked dough products is to inform the enduser about the products, above attempts thus led to unacceptable results. Moreover, the labels in the baked products were not incorporated in the crust of the baked products, but were in fact placed on top of this crust, which makes the products less attractive for the consumer.

According to Gebrauchsmuster 91 14 114.1 breadproducts can be labelled by using a piece of dough as a label that is provided to the moulded dough before this moulded dough is baked. Herefore the dough for the label should contain more flour than the dough for the bread. The adherence between label and dough can further be improved by applying a water layer or a sugar water layer or a salt water layer between dough and moulded dough. The products that can be obtained by this route however still suffer from insufficient incorporation of the label into the bread crust,while also the legibility of the text on the label is insufficient.
In DE 3 515 075 it is disclosed to use wafer like materials (=Oblate) as labelling material for bread doughs. However nothing is disclosed about the way these wafers should be adhered to the dough in order to obtain a product that combines a good adherence with good legibility and an incorporation of the label in the bread crust.
In Fr 2 645 408 dough products are mentioned that consist of a dough bottom, while on top of this bottom a decoration is placed. These products are made by a process wherein a dough is made, from which a decoration is made. This dough decoration is cooled to -40 °C. These decorations are put on the dough product before baking in the oven. This thus means that the moulded dough product provided with the decoration is not frozen before baking. We found that a substantial improvement in appearance of the baked products can be obtained if the moulded dough provided with the label is first subjected to a freezing before the product is baked.

So we studied whether we could find a generic solution for above problems, which could be applied in the preparation of leavened and unleavened bread products, which could be unproofed, parproofed or completely proofed.

As (par)proofing leads to greater volumes of the doughs, the problems with (par)proofed doughs were the greatest, as the label adhered to a dough, that still needed to be parproofed or fully proofed, and thus needed to have some elasticity, in order to extend with the dough volume during proofing, whilst its adherence to the dough product should remain during the proofing.

Above studies resulted in the finding of a novel process, which is applicable on all kinds of dough products with which the desired results can be obtained.

This process therefore concerns a process for the production of labelled dough-product by performing one or more of the following steps:
(i) mixing and kneading of the product-ingredients, at least comprising flour and water;
(ii) resting or parproofing of the dough obtained from step (i) ;
(iii) moulding and/or forming of the dough, obtained after (i) or (ii), optionally followed by a parproofing of the moulded or formed dough product;
(iv) laminating the dough obtained after (i) or (ii) with a fat and/or a fat-replacing system, resulting in a laminated product;
(v) moulding and/or forming of the product obtained after step (iv), optionally followed by a parproofing of this product;
(vi) providing the moulded product from (iii) or the laminated product from (iv) or (v) with an edible, bake stable support, provided with an image and/or a text, preferably made with food-grade pigment(s) and optionally provided with a coating;
(vii) freezing the product of (vi) to -5 to -40 °C;
(viii) proofing of the product of (vi), followed by the freezing according to (vii), or proofing of product resulting from (vii) after thawing; and
(ix) baking of the proofed, labelled product resulting from (viii) or resulting from (vii), optionally after thawing, during 10-90 minutes at 160-270 °C.

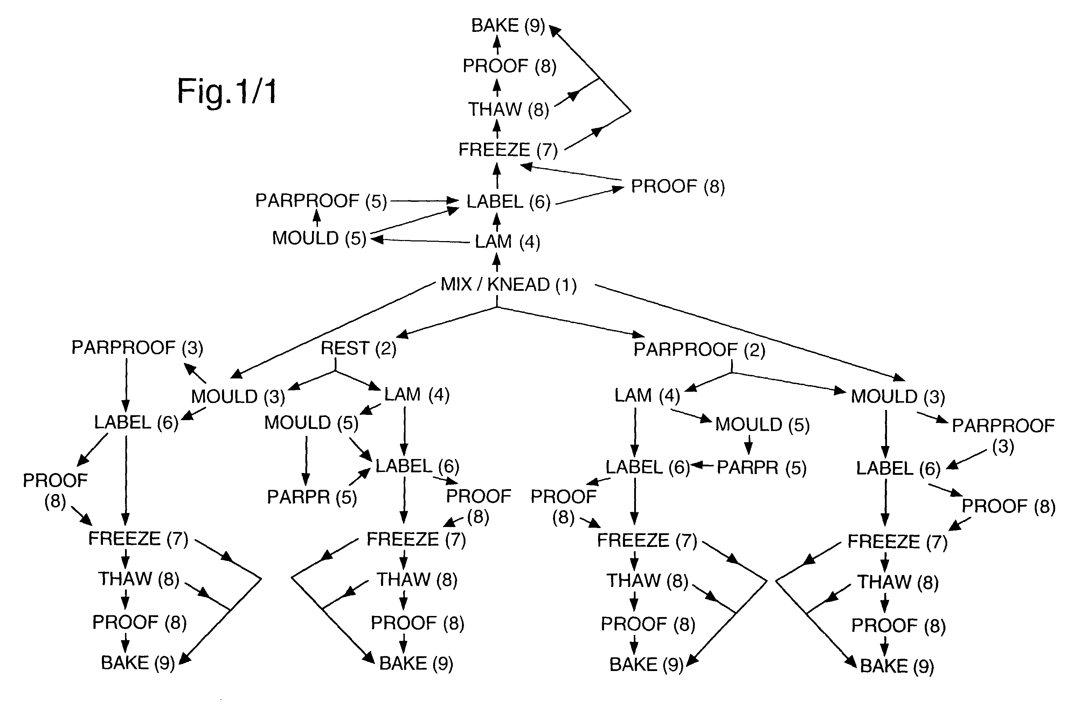

This process schematically is illustrated in fig. 1. In fig. 1 the different process steps are indicated by reference to the numbers 1-9, as given as (i) to (ix) in claim 1.

So the process always starts with a mixing and kneading of the basic dough ingredients. These ingredients are for an unleavened dough: flour and water, while a leavened dough also contains a leavener such as yeast and/or a chemical leavener.

The mixing/kneading can be performed in a batch kneader or in a continuous kneader. The process conditions applied are the standard conditions normally applied during the preparation of each specific type of dough.

After the mixing and kneading a dough is obtained, which can be processed in different ways. In a first route this dough can be laminated, using a lamination fat or fat replacer. These fats and fat replacers are well-known in the prior art.

The conditions during lamination are in fact standard conditions, leading to products with 17-729 layers in the laminate depending on the number of turns that are applied. The dough applied above can contain a leavener, however, it is also possible to apply a dough without a leavener.

The laminate obtained can be provided with the edible, bake stable support in the labelling step (6). However, it is also possible to mould the laminated dough first (e.g. into a croissant) and to label the moulded, laminated dough in the labelling step (6). An alternative for doughs containing a leavener is to subject the moulded, laminated dough to a parproofing and then label the parproofed, moulded, laminated dough in step (6).

Parproofing is achieved by keeping the dough product in a proofing cabinet for 15-90 min at 20-40°C and a relative humidity of 30-90 %.

The dough product obtained is labelled by applying a label, provided with a text or image to the dough. Optionally this label can be provided with a coating, which ensures the colour stability of the text and/or image further. The label suitably is made of a material, which can extend with the dough during proofing. It is preferred to use a label with a thickness of less than 1.0 mm, preferably less than 0.8 mm, most preferably less than 0.5 mm. This helps to guarantee that the label does not form an elevation on the crust after baking and that the colour of the support disappears or becomes pale enough to allow the good legibility of the text and/or image. Very suitable bake-stable supports (or labels) are obtained from mixtures of water and flour and/or starch. These mixtures also can contain some vegetable fat or oil and some sugar, such as glucose.

The best adherence of the label to the dough is obtained if the label is provided with an adhesive from e.g. aqueous modified starch prior to contacting the label with the dough. Even better results were obtained if the label of the product was sprayed with water after labelling.

The text and/or image on these support materials (or labels) are suitably made from pigments, both from inorganic and from organic origin. Examples being: ironoxides, aluminiumoxide and titaniumoxide.

The labelled laminated dough products obtained have to be subjected to a freezing treatment in order to guarantee an acceptable product after baking. Herefore, the products are frozen at -5 to -40°C until a core temperature of -5 to -30°C is obtained. Freezing times are dependent on the type of dough product, but are chosen so that the core temperature is obtained.

As alternative it is also possible to proof the moulded, laminated labelled dough product completely prior to freezing. In that instance the products are kept at 20-40°C for 1.5-6 hrs (rel. humidity 30-90 %). The fully proofed products are then frozen to -5 to -40°C.

The frozen products (either non-proofed, or parproofed or fully proofed) can be baked directly in an oven. It is however also possible to thaw the products first and then bake them.

Non-proofed products can also be fully proofed after they have been frozen. In that instance the frozen products are thawed prior to proofing and baking.

Above process is also applicable for the preparation of non-laminated dough products. In that instance the dough, obtained after mixing/kneading in step (1) is moulded and formed, e.g. to bread or bread rolls. These moulded doughs can be labelled directly or after parproofing (in which case the doughs must contain a leavener). The labelled doughs have to be frozen (again to -5 to -40°C) however, it is also possible to proof the dough products fully prior to freezing. The frozen, moulded, labelled doughs can be baked directly or after thawing. Unproofed dough products can also be proofed after thawing and prior to baking.

In alternative processes the dough, obtained after mixing and kneading in step (1), also containing a leavener can first be subjected to a resting treatment or to a parproofing. Resting is performed at 10-30°C and 30-90 % relative humidity for 2-30 min. Parproofing is achieved under the conditions mentioned before.

The doughs, obtained after resting or after parproofing can be moulded in step (3), and treated further as the non-laminated doughs mentioned above.

The rested or parproofed doughs, obtained after step (2) mentioned above can also be laminated under the same conditions and using the same lamination fats or fat replacers as mentioned earlier. The processing routes involve the steps (1) -> (2) -> (4) -> (6) (optionally via (5)) -> (7) -> (9) (optionally via (8)), as illustrated in fig. 1/1).

In a preferred embodiment of our invention filled baked dough products are made. Fillings that are typically applied comprise fruit fillings (in particular apple and cherry), almond paste fillings, chocolate fillings, jam fillings, cheese fillings and ham fillings. These filled products are produced by a process according to claim 1, wherein during the moulding and/or forming of the products in steps (iii) or (v) the dough products are filled with a liquid and/or solid filling, in particular fruit, almond paste, chocolate, jam, cheese, or ham fillings.

For the baking of our doughs all types of ovens can be used. Typical baking conditions are 10-90 min at 160-270°C.

It was further found that the best results were obtained, when a coating layer was applied during the production of our labelled dough systems. Therefore, our invention also concerns a process according to claim 1, wherein the labelling step (vi) or the freezing step (vii) or the proofing step (viii) is followed by a coating step, using an egg-yolk based coating or another coating composition. The coating however, can also be provided to the label prior to the actual labelling step.

Very useful coating compositions comprise shellac gum and vegetable oil, while also some sorbitol can be present. These coatings help to protect the soluble colours, present in the composition for the image or the text for the label.

A way to protect the colours from solubilization was found to be the following:
- labels are produced with a rectangular shape
- these labels are provided with a text and/or an image
- a coating is provided over the label obtained
- the labels are cut to the desired size and shape, however keeping a margin without any colour of 0.5-4mm around the text and/or image on the coated layer
- optionally the internal and/or external side of the soluble colour is provided with a layer (0.05-3 mm) of an insoluble colour.

Baked dough products obtained after baking of a labelled dough product, wherein the label comprises an edible, bake-stable support material, provided with an image and/or a text, made with food-grade pigment(s), in particular baked dough products, wherein the support material comprises a mixture of water and starch and/or flour, preferably wherein the food-grade pigment(s) is (are) selected from the group consisting of: inorganic pigments, such as ironoxides, aluminiumoxide, titaniumoxide, and organic pigments and wherein the label is fully incorporated in the crust of the baked products are also part of the invention.

### EXAMPLES

### Example 1:

### laminated dough without leavener (galette des rois)

| **Dough formulation** | **%** |
|---|---|
| Flour | 100 |
| Salt | 2 |
| Water | 46 |
| Butter | 58 |
| Almond paste | 88 |

The dough was prepared by mixing and kneading of the different ingredients (except the butter and the almond paste) for 10 minutes. Then the dough was laminated by extrusion of the butter and folding until 96 dough layers were obtained. The dough was sheeted to 4 mm. After a short resting time (10 minutes), the dough was separated into 2 parts: the bottom and the top of the galette des rois. The bottom part was filled with the almond paste. During that time, the top was slightly scored. After these 2 operations, the top was put on the bottom part of the galette, sliced in circles with a diameter of 24 cm. The label was than positioned on the top of the galette and sticked with water. The surface was coated with whole egg, pricked, and the finished galettes were frozen for 45 minutes. The products were baked frozen during 40 min at 180°C in a convection oven.

### Example 2

### laminated douqh with leavener croissant

| **Dough formulation** | **%** |
|---|---|
| Flour | 100 |
| Croissant improver | 1.1 |
| Salt | 4.4 |
| Water | 48.8 |
| Sugar | 11.1 |
| Yeast | 6.7 |
| Butter | 51.1 |

The dough was prepared by mixing and kneading of the different ingredients (except the butter) for 4 minutes (first speed) and 9 minutes (second speed). Then the dough was laminated by extrusion of the butter and folding until 16 dough layers were obtained. The dough was sheeted to 4.5 mm, cut into triangles (bottom: 12.5 cm; hight: 13.5 cm). The triangles were then formed into croissants. At that step, the label was positioned on the top of the croissant and sticked with water, and the finished products were frozen for 20 minutes. Prior to baking the products were thawed and proofed in a proofing cabinet (25°C, rel. hum. 50-60%) for 150 min. Thereafter, the products were coated with whole egg and baked during 25 minutes at 180°C in a convection oven.

### Example 3

### moulded dough with leavener (country bread)

| **Dough formulation** | **%** |
|---|---|
| Flour | 100 |
| Country bread mix | 25 |
| Water + ice | 70.5 |
| Yeast | 6.5 |

The dough was prepared by mixing and kneading of the different ingredients (except yeast) for 3 minutes (first speed). Then the yeast was added, and the dough was kneaded again for 11 minutes (second speed). Then the dough was divided into pieces of 550 g. The pieces were rounded and rested for 7 to 10 minutes at 14°C. After resting, the pieces were moulded into breads of 23 cm length. At that step, the label was positioned on the top of the bread and sticked with water, and the finished product was frozen for 50 minutes. Prior to baking the breads were thawed and proofed in a proofing cabinet(25°C, rel. hum. 50-60%) for 240 minutes. Thereafter, baking occurred at 180°C for 45 minutes from which 30 minutes with steam, in a convection oven.

## Claims

1. Process for the production of labelled dough-product by performing the following steps:
(i) mixing and kneading of the product-ingredients, at least comprising flour and water;
(ii) resting or parproofing of the dough obtained from step (i);
(iii) moulding and/or forming of the dough, obtained after (i) or (ii), optionally followed by a parproofing of the moulded or formed dough product; or
(iv) laminating the dough obtained after (i) or (ii) with a fat and/or a fat-replacing system, resulting in a laminated product;
(v) moulding and/or forming of the product obtained after step (iv), optionally followed by a parproofing of this product;
(vi) providing the moulded product from (iii) or the laminated product from (iv) or (v) with an edible, bake stable support, provided with an image and/or a text, preferably made with food-grade pigment(s);
(vii) freezing the product of (vi) to -5 to -40 °C;
(viii) proofing of the product of (vi), followed by the freezing according to (vii), or proofing of product resulting from (vii) after thawing; and
(ix) baking of the proofed, labelled product resulting from (viii) or resulting from (vii), optionally after thawing, during 10-90 minutes at 160-270 °C.

2. Process according to claim 1, wherein during the moulding and/or forming of the products in steps (iii) or (v) the dough products are filled with a liquid and/or solid filling, in particular fruit, almond paste, chocolate, jam, cheese, or ham fillings.

3. Process according to claim 1, wherein the labelling step (vi) or the freezing step (vii) or the proofing step (viii) is followed by a coating step, using an egg-yolk based coating or another coating composition.

4. Process according to claim 1, wherein the support is made of a material, which can extend with the dough-mass during proofing and having a thickness of less than 1.0 mm, preferably less than 0.8 mm, most preferably less than 0.5 mm.

5. Process according to claim 4, wherein the edible, bake-stable support, used in step (vi) is made of water and flour and/or starch.

6. Process according to claims 1-5, wherein the image and/or text on the support used in step (vi) is made of: inorganic pigments, such as ironoxides and/or aluminiumoxide and/or titaniumoxide or organic pigments .

7. Baked labelled dough-product, obtained after baking of a labelled dough-product which has been subjected to freezing to -5°C to -40°C, wherein the label comprises an edible, bake-stable support material, provided with an image and/or a text, made with food-grade pigment(s), and which label is fully incorporated into the crust of the baked dough-product.

8. Baked labelled dough-product according to claim 7, wherein the support material comprises a mixture of water and starch and/or flour.

9. Baked labelled dough-product according to claims 7-8, wherein the food-grade pigment(s) is (are) selected from the group consisting of: inorganic pigments, such as ironoxides, aluminiumoxide, titaniumoxide, and organic pigments .

## Patentansprüche

1. Verfahren zur Herstellung eines etikettierten Teigprodukts unter Durchführung der folgenden Schritte:
(i) Mischen und Kneten der Produktbestandteile, mindestens von Mehl und Wasser;
(ii) Ruhenlassen oder Zwischengare des aus Schritt (i) erhaltenen Teigs;
(iii) Aufmachen und/oder Ausformen des nach (i) oder (ii) erhaltenen Teigs und im Anschluß daran gegebenenfalls Zwischengare des aufgemachten oder ausgeformten Teigprodukts; oder
(iv) Schichten des nach (i) oder (ii) erhaltenen Teigs mit einem Fett und/oder Fettersatzsystem unter Erhalt eines Schichtprodukts;
(v) Aufmachen und/oder Ausformen des nach Schritt (iv) erhaltenen Produkts und im Anschluß daran gegebenenfalls Zwischengare dieses Produkts;
(vi) Ausstatten des geformten Produktes von (iii) oder des Schichtproduktes von (iv) oder (v) mit einem eßbaren backstabilen Träger, der mit einem vorzugsweise mit Pigment(en) von Lebensmittelqualität hergestellten Bild und/oder Text versehen ist;
(vii) Gefrieren des Produktes von (vi) auf -5 bis -40 °C;
(viii) Gare des Produktes von (vi) und anschließendes Gefrieren gemäß (vii), oder Gare des aus (vii) erhaltenen Produkts nach dem Auftauen; und
(ix) Backen des gegärten, etikettierten, aus (viii) oder aus (vii) resultierenden Produkts, gegebenenfalls nach dem Auftauen, während 10-90 min bei 160-270 °C.

2. Verfahren nach Anspruch 1, wobei während des Aufmachens und/oder Ausformens der Produkte in den Schritten (iii) oder (v) die Teigprodukte mit einer flüssigen und/oder festen Füllung, insbesondere mit Fruchtfüllung, Mandelpastenfüllung, Schokoladenfüllung, Marmeladenfüllung, Käsefüllung oder Schinkenfüllung, gefüllt werden.

3. Verfahren nach Anspruch 1, wobei nach dem Etikettierschritt (vi) oder dem Gefrierschritt (vii) oder dem Gare-Schritt (viii) ein Beschichtungsschritt unter Verwendung einer auf Eigelb basierenden Beschichtung oder einer anderen Beschichtungszusammensetzung folgt.

4. Verfahren nach Anspruch 1, wobei der Träger aus einem Material hergestellt wird, das sich mit der Teigmasse während der Gare ausdehnen kann und eine Dicke von weniger als 1,0 mm, vorzugsweise weniger als 0,8 mm, am meisten bevorzugt weniger als 0,5 mm aufweist.

5. Verfahren nach Anspruch 4, wobei der eßbare backstabile in Schritt (vi) verwendete Träger aus Wasser und Mehl und/oder Stärke hergestellt wird.

6. Verfahren nach den Ansprüchen 1-5, wobei das Bild und/oder der Text auf dem in Schritt (vi) verwendeten Träger aus anorganischen Pigmenten, wie Eisenoxiden und/oder Aluminiumoxid und/oder Titanoxid, oder organischen Pigmenten hergestellt wird.

7. Etikettierte Teigbackware, die nach dem Backen eines etikettierten, auf -5 °C bis -40 °C gefrorenen Teigprodukts erhalten worden ist, wobei das Etikett ein eßbares backstabiles Trägermaterial aufweist, das mit einem mit Pigment(en) von Lebensmittelqualität hergestellten Bild und/oder einem Text ausgestattet ist, und wobei das Etikett vollständig in die Kruste der Teigbackware eingearbeitet ist.

8. Etikettierte Teigbackware nach Anspruch 7, wobei das Trägermaterial ein Gemisch von Wasser und Stärke und/oder Mehl enthält.

9. Etikettierte Teigbackware nach den Ansprüchen 7-8, wobei das (die) Pigment(e) von Lebensmittelqualität aus der Gruppe ausgewählt ist (sind), bestehend aus: anorganischen Pigmenten, wie Eisenoxiden, Aluminiumoxid, Titanoxid, und organischen Pigmenten.

## Revendications

1. Procédé de production d'un produit marqué à base de pâte, comprenant l'exécution des étapes suivantes :
(i) mélange et pétrissage des ingrédients du produit, comprenant au moins de la farine et de l'eau ;
(ii) repos ou fermentation partielle de la pâte obtenue lors de l'étape (i) ;
(iii) moulage et/ou conformation de la pâte obtenue après l'étape (i) ou l'étape (ii), optionnellement suivie par une fermentation partielle du produit en pâte moulé ou mis en forme ; ou
(iv) laminage de la pâte obtenue après l'étape (i) ou l'étape (ii) avec un complexe gras ou de substitution de matière grasse, résultant en un produit feuilleté ;
(v) moulage et/ou conformation de la pâte obtenue après l'étape (iv), optionnellement suivie par une fermentation partielle de ce produit ;
(vi) fourniture du produit moulé de l'étape (iii) ou du produit laminé de l'étape (iv) ou (v) avec un support comestible de cuisson stable à la cuisson au four, fourni avec une image et/ou un texte, préférentiellement réalisé avec des pigments alimentaires ;
(vii) congélation du produit de l'étape (vi) de -5 à -40 °C ;
(viii) levée du produit de l'étape (vi), suivie par la congélation selon l'étape (vii), ou levée du produit résultant de l'étape (vii) après décongélation ; et
(ix) cuisson au four du produit levé et marqué de l'étape (viii) ou résultant de l'étape (vii), optionnellement après décongélation, durant 10 à 90 minutes à 160-270 °C.

2. Procédé selon la revendication 1, caractérisé en ce que durant le moulage et/ou la mise en forme des produits lors des étapes (iii) ou (v) les produits en pâte sont fourrés avec un liquide et/ou un solide de remplissage, en particulier avec des garnitures de fruit, pâte d'amande, chocolat, confiture, fromage ou jambon.

3. Procédé selon la revendication 1, caractérisé en ce que l'étape de marquage (vi), de congélation (vii) ou de levée (viii) est suivie par une étape d'enrobage, utilisant un enrobage à base de jaune d'oeuf ou une autre composition d'enrobage.

4. Procédé selon la revendication 1, caractérisé en ce que le support est fabriqué à partir d'une matière qui peut s'étendre avec la masse pâteuse au cours de la levée et présentant une épaisseur inférieure à 1,0 mm, préférentiellement inférieure à 0,8 mm et encore plus préférentiellement inférieure à 0,5 mm.

5. Procédé selon la revendication 4, caractérisé en ce que le support comestible de cuisson stable à la cuisson au four utilisé lors de l'étape (vi) est fabriqué à partir d'eau, de farine et/ou d'amidon.

6. Procédé selon les revendications 1 à 5, caractérisé en ce que l'image et/ou le texte du support utilisé(s) lors de l'étape (vi) est(sont) fabriqué(s) à partir de : pigments minéraux, tels que pigments à base d'oxydes de fer et/ou d'oxyde d'aluminium et/ou d'oxyde de titane ou pigments organiques.

7. Produit marqué à base de pâte cuit au four, obtenu après cuisson au four d'un produit marqué à base de pâte qui a été soumis à la congélation de -5 à -40 °C, le marquage comprenant une matière de support stable à la cuisson au four, fournie avec une image et/ou un texte, fabriqué à partir de pigment(s) alimentaire(s) et en ce que le marquage est entièrement incorporé dans la croûte du produit en pâte cuit au four.

8. Produit marqué à base de pâte cuit au four selon la revendication 7, caractérisé en ce que la matière de support comporte un mélange d'eau, d'amidon et/ou de farine.

9. Produit marqué à base de pâte cuit au four selon les revendications 7 à 8, caractérisé en ce que le(s) pigment(s) alimentaire(s) est(sont) choisi(s) dans le groupe consistant en : les pigments minéraux, tels que les pigments à base d'oxydes de fer et/ou d'oxyde d'aluminium et/ou d'oxyde de titane ou les pigments organiques.
